# DEMANDE DE BREVET EUROPEEN

(11) **EP 3 604 033 A1**
(43) Date de publication de la demande: **05.02.2020**
(21) Numéro de dépôt: 19173806.1
(22) Date de dépôt: 10.05.2019
(51) Int. Cl.: B60P 3/025, B60J 7/14, B60R 13/07

(54) **DISPOSITIF MOBILE DE PRESENTATION, NOTAMMENT D'UN VEHICULE, AVEC AMENAGEMENTS**

(30) Priorité: 03.08.2018 FR 1800839
(71) Demandeur: Solisysteme, 86170 Avanton (FR); Ponthieu, Jean-Pierre, 60430 Sint Sulpice (FR)
(72) Inventeur: PONTHIEU, Jean-Pierre, 60430 SAINT SULPICE (FR); CASTEL, Jean-Louis, 86000 POITIERS (FR)
(74) Mandataire: Aquinov

(57) **Abrégé**

Dispositif mobile de présentation de produits P, notamment une voiture, comprenant un châssis (10) monté sur un train de roues (12) avec un attelage de traction (14), une façade multifonctions (34), caractérisé en ce que façade multifonctions (34) comprend un panneau (36) et des moyens d'articulation (38) de ladite façade par rapport au châssis (16), autour d'un axe horizontal XX', transversal et situé immédiatement au-dessus dudit attelage de traction (14), de façon à prendre au moins deux positions extrêmes, une première position relevée dans laquelle la façade multifonctions (34) avant est verticale et une seconde position abaissée dans laquelle la façade multifonctions (34) est abaissée et au-dessus dudit attelage de traction (14).

## Description

L'invention concerne un dispositif mobile de présentation, notamment d'un véhicule, avec aménagements.

Il existe un besoin de présentation de produits, relativement volumineux, comme un véhicule, dans des lieux très variés comme des manifestations commerciales du type foires, salons, des évènements sportifs, des centres commerciaux, des succursales. Or un véhicule, s'il doit être déplacé, nécessite un plateau, un déplacement d'un commercial qui assure la présentation et qui doit fournir les informations ou encore signer des contrats. Un bureau peut alors être nécessaire. De plus, les véhicules pour ne prendre que cet exemple sont présentés au sol or pour mettre en valeur un tel véhicule, il conviendrait de le placer sur un podium, ce qui nécessite donc de prévoir l'installation sur le lieu de présentation d'un podium. Tous ces besoins et toutes ces contraintes engagent des frais importants, des délais de mise en place, une organisation des actions, des obligations une fois les programmations établies au détriment des la souplesse nécessaire et de la rapidité d'intervention. Un produit et notamment un véhicule, encore plus un véhicule coupé avec toit ouvrant doit être présenté à l'air libre et sous la lumière, si possible naturelle. Or, un véhicule présenté en extérieur est soumis aux aléas climatiques et il est bon de pouvoir présenter à l'air libre, au soleil un produit et quasi instantanément pouvoir le mettre à l'abri d'une chute de pluie ou de grêle pouvant porter atteinte à l'intégrité du produit.

On sait aussi que les remorques de présentation qui existent comprennent un plateau, des moyens de roulage sous forme de trains de roues et un attelage desdites remorques afin de pouvoir tracter de telles remorques. Or une fois en place, les remorques sont des outils mécaniques et ne sont ni esthétiques, ni sécuritaires. Ainsi, un timon d'attelage reste un problème pour les individus se déplaçant sur le lieu d'exposition, car il est en saillie, à une hauteur suffisamment basse pour ne pas être dans le champ de vision, comme une marche au sol mais suffisamment haut pour faire trébucher et/ou blesser.

Les remorques d'exposition doivent être ouvertes pour offrir une visibilité optimale, un panneau peut être prévu sur un des côtés mais il est une partie qui pose un problème c'est la partie frontale de la remorque. En effet, cette partie frontale doit pouvoir être protectrice contre les intempéries, les insectes et autres objets projetés comme les gravillons durant le roulage mais qui doit pouvoir être ouverte durant l'exposition.

Un autre besoin est une surface de convivialité pour cocktail, d'extension pour de la présentation de publicité, pour de la pose d'accessoires en hauteur comme un écran vidéo. Or l'adjonction d'une table volante pose des problèmes d'intendance, des risques de chute sous un coup de vent ou encore d'encombrement de la zone de présentation.

Enfin, un lieu plus intime doit pouvoir aussi être prévu afin de prolonger des discussions ou pour des signatures de contrats ou encore pour se mettre à l'abri du vent ou encore des intempéries soudaines etc.

Le but de la présente invention est de proposer un dispositif qui répondent à l'ensemble des besoins ci-dessus exprimés, tout en présentant un caractère esthétique marqué, en étant très simple d'utilisation et en permettant d'améliorer très fortement la visibilité d'un produit ou des moyens de communication d'un produit lorsqu'ils sont encombrants. La présente invention est maintenant décrite à l'aide d'exemples uniquement illustratifs et nullement limitatifs de la portée de l'invention, et à partir des illustrations jointes, dans lesquelles :
[Fig. 1] représente une vue en perspective de l'arrière d'un dispositif selon la présente invention,.
[Fig. 2] représente une vue en élévation latérale de ce dispositif, en position roulage.
[Fig. 3] représente une vue en élévation latérale de ce dispositif en position présentation.

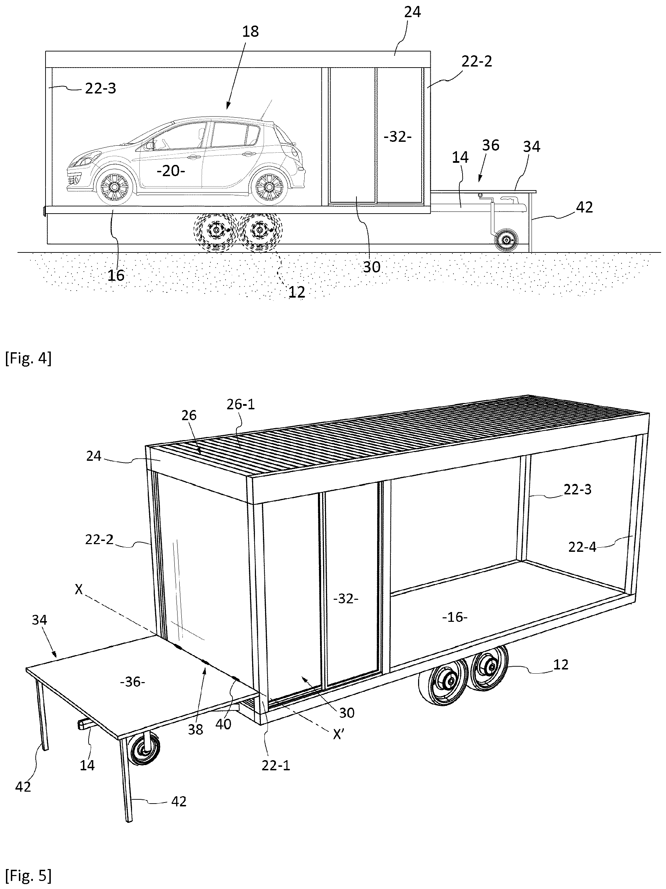

[Fig. 4] représente une vue en perspective avant du dispositif en position présentation,
[Fig. 5] représente une vue de dessus du dispositif, mode présentation, toit ouvert.

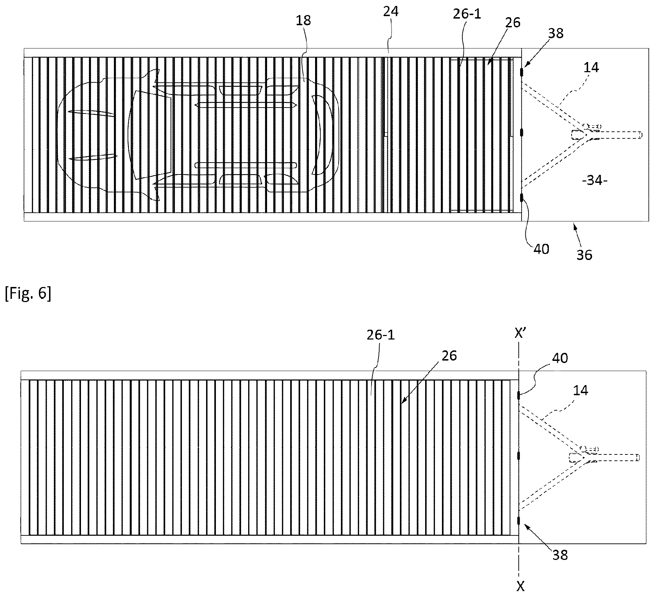

[Fig. 6] représente une vue de dessus du dispositif, mode présentation, toit fermé.

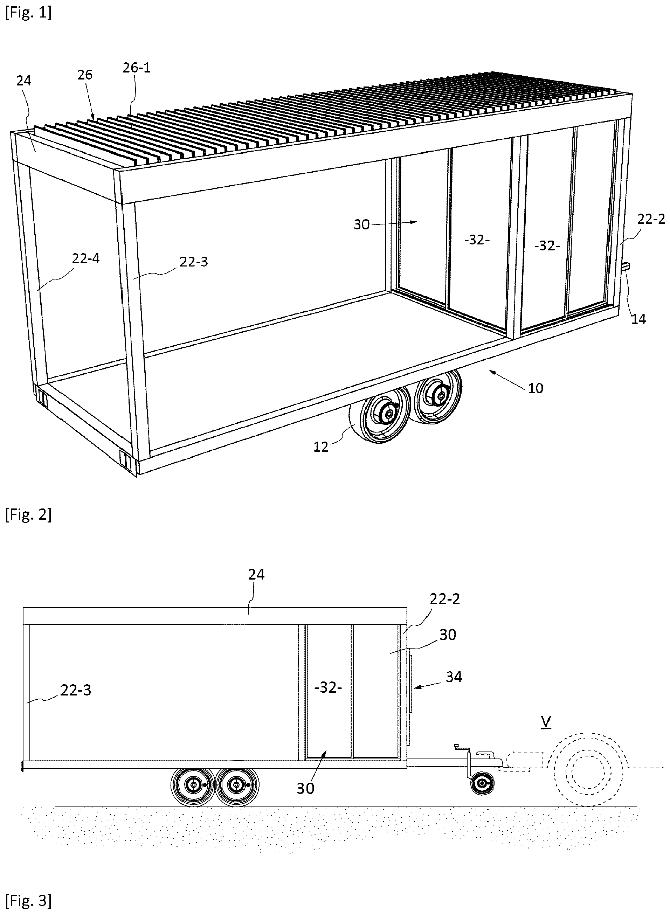

Le dispositif de l'invention illustré sur les différentes figures. Ce dispositif comprend un châssis 10 monté sur un train de roues 12 avec un attelage de traction 14 par un véhicule V, symbolisé en trait discontinu sur la figure 2.

Le châssis 10 comporte un plateau 16 destiné à recevoir notamment un produit 18 à présenter, en l'occurrence un véhicule 20. Le châssis est complété par au moins quatre poteaux 22-1, 22-2, 22-3 et 22-4, dans chacun des angles du plateau 16. Un cadre 24 est placé en partie supérieure de ces quatre poteaux afin de constituer un toit 26. Ce toit 26 est avantageusement constitué de lames orientables 26-1, longues et étroites, articulées et mobiles en rotation autour de l'axe longitudinal desdites lames. Un mécanisme permet de manoeuvrer les lames simultanément ou pargroupe, au moyen d'une motorisation. Les lames 26-1 ont avantageusement des profils permettant un emboîtement par les bords longitudinaux. Ainsi, dans une position d'ouverture maximale, toutes les lames ont leurs plans parallèles aux rayons du soleil autorisant une pénétration maximale du soleil et dans une position de fermeture maximale, les lames offrent un toit totalement occultant. Les profils des lames sont tels qu'ils permettent une intégration des bords longitudinaux et également une évacuation de l'eau recueillie sur les lames constituant le toit vers des gouttières, notamment des gouttières intégrées dans les poteaux 22 pour éviter un effet disgracieux. Le châssis 10 peut être complété par des moyens amovibles d'accès à la surface du plateau 16, tels qu'un escalier et le plateau peut comporter un revêtement de surface tel qu'un gazon synthétique afin de conférer à l'ensemble un aspect agréable et attractif. Le plateau 16 comprend de plus des moyens d'arrimage 28 intégrés afin de pouvoir solidariser les produits exposés pendant le roulage. Des rampes d'accès amovibles, non représentées, sont prévues de façon connue afin de permettre la mise en place du produit 18, tel qu'un véhicule, sur ledit plateau 16.

Sur le plateau 16, le mode de réalisation représenté propose la mise en place d'une alcôve 30 en tête de plateau, formant salon par exemple, séparée du plateau par une porte 32 et/ou munie d'une porte 32 sur une des façades latérales. Cette alcôve 30 peut être équipée d'un mini salon avec des sièges formant coffre pour optimiser l'espace.

Le dispositif de présentation selon la présente invention comprend de plus une façade multifonctions 34. Cette façade multifonctions 34 comprend un panneau 36 et des moyens d'articulation 38 dudit panneau et donc de la façade multifonctions 34 par rapport au châssis 16 autour d'un axe horizontal XX', transversal et situé immédiatement au-dessus de l'attelage. Les moyens d'articulation peuvent être des charnières 40 portées par le plateau ou par l'attelage. Avantageusement, des vérins d'assistance aux mouvements, interposés entre le châssis 10 et la façade multifonctions 34 facilitent les manoeuvres de ladite façade. Le panneau peut donc prendre au moins deux positions extrêmes, une première position relevée dans laquelle la façade multifonctions 34 avant du volume défini par les poteaux avant, par le cadre 24 et par le plateau 16 est fermée et une seconde position abaissée dans laquelle la façade multifonctions 34 est abaissée et vient au-dessus de l'attelage. Des jambages articulés 42, au nombre de deux, également avantageusement équipés de vérins d'assistance, sont placés dans les angles libres de ladite façade multifonctions 34. Ces jambages articulés 42sont parallèles lorsque la façade multifonctions 34 est dans la première position et à 90° lorsque la façade multifonctions 34 est dans la seconde position, formant alors les piètements de la façade multifonctions 34, devenue plateau multiusages. Les jambages peuvent comporter des moyens d'ajustement de la longueur pour compenser les inégalités du sol, lorsque le piètement est en service. La façade multifonctions 34 comprend, sur sa bordure périphérique, tout moyen de réception d'une banderole informative, publicitaire, crochets, pression, rail etc.

Le dispositif mobile de présentation est aménagé avec tout élément d'éclairage, de projection, d'écrans vidéo ou lumineux, de sonorisation de façon parfaitement connue.

Le dispositif de présentation selon la présente invention est mis en service suivant différentes modalités. Si l'on retient l'exemple de présentation d'un véhicule par un opérateur commercial, ledit opérateur dispose le véhicule à présenter sur le plateau grâce aux rampes amovibles par exemple. Le dispositif peut comporter sur une façade longitudinale un panneau souple ou rigide d'occultation et de communication. L'opérateur arrime le véhicule à présenter sur le plateau 16. La façade multifonction est dans la première position afin de protéger la façade et de permettre l'accès à l'attelage de traction 14. Les lames sont placées en position adaptée, légèrement entrouvertes pour limiter l'effet de dépression lié au roulage. L'opérateur peut déplacer le dispositif mobile de présentation selon la présente invention, grâce à un véhicule adapté.

Une fois sur place, l'opérateur commercial dételle le dispositif et le place dans la position déterminée. L'opérateur commercial place la façade multifonctions 34 dans la seconde position, abaissée avec le piètement en place. Cette manoeuvre permet de disposer d'une surface d'accueil, stable et de masquer l'attelage de traction qui comprend généralement un timon et une roue jockey. Les visiteurs, promeneurs, opérationnels ne peuvent donc plus heurter, voire se blesser contre ledit attelage de traction. La banderole informative, publicitaire est mise en place, ce qui masque encore plus ledit attelage de traction et qui améliore également l'esthétique en ayant un rôle de communication. L'opérateur commercial peut ensuite mettre en place les accessoires lumineux et sonores puis soit recevoir dans l'alcôve si elle est en place soit être présent autour de la façade multifonctions 34 devenue plateau multiusages.

Le dispositif mobile présente l'avantage de profiter au mieux des conditions climatiques. Si le temps est beau et ensoleillé, l'opérateur commercial ouvre les lames afin d'inonder de lumière, voire de soleil le plateau 16 et si le temps ne s'y prête pas, si la présentation est en soirée, s'il pleut, l'opérateur commercial ferme les lames pour bénéficier d'un toit en dur, protecteur et rigide, du plus bel aspect esthétique contrairement aux couvertures souples proposées habituellement. De plus, les précipitations sont parfaitement évacuées et ne peuvent en aucun cas générer d'accumulations d'eau, les bords du cadre ne génèrent pas des gouttes bien longtemps après les précipitations, par ruissellement résiduel. On note que le dispositif selon la présente invention assure une diffusion communicative durant les trajets et lors de tout arrêt, ce qui est un important atout. La mise en place mécanique est d'une grande simplicité.

## Revendications

1. Dispositif mobile de présentation de produits P, notamment une voiture, comprenant un châssis (10) monté sur un train de roues (12) avec un attelage de traction (14), une façade multifonctions (34), **caractérisé en ce que** façade multifonctions (34) comprend un panneau (36) et des moyens d'articulation (38) de ladite façade par rapport au châssis (16), autour d'un axe horizontal XX', transversal et situé immédiatement au-dessus dudit attelage de traction (14), de façon à prendre au moins deux positions extrêmes, une première position relevée de déplacement, dans laquelle la façade multifonctions (34) avant est verticale et une seconde position abaissée de présentation, dans laquelle la façade multifonctions (34) avant est abaissée et au-dessus dudit attelage de traction (14).

2. Dispositif mobile de présentation selon la revendication 1, **caractérisé en ce que** le panneau multifonctions (34) comporte des vérins d'assistance aux mouvements interposés entre le châssis (10) et la façade multifonctions (34).

3. Dispositif mobile de présentation selon la revendication 1 ou 2, **caractérisé en ce que** le panneau multifonctions (34) comporte des jambages articulés (42) placés dans les angles libres de ladite façade multifonctions (34).

4. Dispositif mobile de présentation selon la revendication 2 ou 3, **caractérisé en ce que** des vérins d'assistance sont interposés entre le panneau (36) de la façade multifonctions (34) et les jambages articulés (42).

5. Dispositif mobile de présentation selon l'une quelconque des revendications précédentes, **caractérisé en ce que** le châssis (10) comprend au moins quatre poteaux (22-1, 22-2, 22-3, 22-4), dans chacun des angles du plateau (16), un cadre (24) placé en partie supérieure de ces quatre poteaux afin de constituer un toit (26).

6. Dispositif mobile de présentation la revendication 5, **caractérisé en ce que** le toit (26) est avantageusement constitué de lames orientables (26-1), longues et étroites, articulées et mobiles en rotation autour de l'axe longitudinal desdites lames, avec un mécanisme permettant de manoeuvrer les lames simultanément ou par groupe.

7. Dispositif mobile de présentation la revendication 6, **caractérisé en ce que** les profils des lames sont à emboîtement par les bords longitudinaux.

8. Dispositif mobile de présentation la revendication 5, 6 ou 7, **caractérisé en ce que** le toit comprend des gouttières intégrées dans les poteaux (22).]
